# EUROPÄISCHE PATENTSCHRIFT

(11) **EP 2 516 999 B1**
(45) Veröffentlichungstag und Bekanntmachung des Hinweises auf die Patenterteilung: **16.10.2013**
(21) Anmeldenummer: 10798798.4
(22) Anmeldetag: 21.12.2010
(51) Int. Cl.: G01N 30/04, G01N 30/12, G01N 30/24, G01N 30/72, G01F 11/02

(54) **FLÜSSIGDOSIER-VORRICHTUNG FÜR EINEN GASANALYSATOR**
FLUID DOSING DEVICE FOR A GAS ANALYZER
DISPOSITIF DE DOSAGE DE FLUIDE POUR UN ANALYSEUR DE GAZ

(30) Priorität: 22.12.2009 DE 102009059963
(43) Veröffentlichungstag der Anmeldung: 31.10.2012
(73) Patentinhaber: Siemens Aktiengesellschaft, 80333 München (DE)
(72) Erfinder: GELLERT, Udo, 76756 Bellheim (DE)
(86) Internationale Anmeldenummer: PCT/EP2010/070342
(87) Internationale Veröffentlichungsnummer: WO 2011/076774

(56) Entgegenhaltungen:
- DE-A1- 10 127 353
- DE-C1- 10 047 341
- FR-A1- 2 597 631

## Beschreibung

Die Erfindung betrifft eine Flüssigdosier-Vorrichtung für einen Gasanalysator nach dem Oberbegriff des Anspruchs 1.

Eine derartige, einen Tropfengenerator umfassende Flüssigdosier-Vorrichtung ist aus der DE 10127353 A1 bekannt.

Für die Verarbeitung oder Behandlung von Flüssigkeiten, beispielsweise deren Analyse, kann eine vorherige Reinigung der Probe von gelösten, nicht verdampfbaren Anteilen durch vollständiges Verdampfen und anschließendes vollständiges Kondensieren der Flüssigkeit erforderlich sein. Speziell bei der Prozesschromatographie soll der Dosiervorgang prozesstauglich, d. h. automatisch durchführbar, sein. Die kleinste dosierbare Flüssigkeitsmenge soll deutlich unter 0,1 µl liegen und eine Diskriminierung der verdampften Flüssigkeitsprobe, beispielsweise in Form von lokalen Konzentrationsunterschieden unterschiedlicher Verdampfungsbestandteile im Dampf, ausgeschlossen sein. So führt z. B. einfaches Eintropfen der Flüssigkeit in einen beheizten Verdampfungsraum zu einer ungleichmäßigen Verdampfung, weil jeder einzelne Tropfen in einer durch Tropfengröße und äußere Umstände bestimmten Zeit fraktioniert verdampft; dabei verdampfen Inhaltsstoffe mit niedrigem Siedepunkt zuerst und Inhaltsstoffe mit hohem Siedepunkt zuletzt.

Bei der bekannten Flüssigdosier-Vorrichtung ist daher ein Tropfengenerator vorgesehen, der bei Anregung einen Flüssigkeitstropfen entgegen einer Gasströmung aus einem kalten Bereich in einen beheizbaren Bereich, z. B. ein Kapillarrohr, schießt. Der Tropfengenerator weist einen Vorratsraum und einen durch einen elektromechanischen Wandler, z. B. einen Piezowandler, veränderbaren Verdrängungsraum mit einer Austrittsöffnung für die Tröpfchen auf.

Mit dem die Flüssigkeit in Tropfen mit hoher Geschwindigkeit verschießenden Tropfengenerator lassen sich kleinste Tröpfchen mit einem Volumen von beispielsweise 50 pl erzeugen, so dass über die Anzahl der zu erzeugenden Tropfen auch kleinste Flüssigkeitsmengen genau dosiert werden können. Die in den beheizbaren Bereich geschossenen Tropfen verdampfen dort schnell und vollständig, wobei es wegen der sehr geringen Tropfengröße und der ungesplitteten Betriebsweise zu keiner Diskriminierung der Flüssigkeitsprobe kommt. Flüssigkeit, die unbeabsichtigt aus der Austrittsöffnung des Tropfengenerators quillt, wird mittels der Gasströmung entsorgt und gelangt nicht in das Kapillarrohr.

Der Erfindung liegt die Aufgabe zugrunde, die bekannte Flüssigdosier-Vorrichtung dahingehend weiterzubilden, dass sie für die automatische und quasi-kontinuierliche Flüssigdosierung in der Prozessanalytik geeignet ist.

Gemäß der Erfindung wird die Aufgabe durch die in Anspruch 1 angegebene Flüssigdosier-Vorrichtung gelöst, von der vorteilhafte Weiterbildungen den Unteransprüchen zu entnehmen sind.

Die Flüssigdosier-Vorrichtung weist insbesondere folgende Merkmale und Vorteile auf:
Die, beispielsweise aus einem Prozess entnommene, zu dosierende Flüssigkeit wird periodisch in die Verdampfungskammer geleitet und dort verdampft. Der Dampf oder das bereits gebildete Kondensat wird in die Kondensatkammer geleitet, so dass dort nur noch verdampfbare Flüssigkeitskomponenten vorliegen. Während des Verdampfens und anschließenden Kondensierens der zu dosierenden Flüssigkeit werden dazu nicht benutzten Räume und Kammern mit dem Gas, z. B. dem Trägergas eine Gaschromatographen, gespült, um noch vorhandene Flüssigkeitsreste zu entfernen. Anschließend wird mit Hilfe des Gases das Kondensat in die für die Tropfenerzeugung benötigten Räume und Kammern überführt, während gleichzeitig die Verdampfungskammer wieder mit Flüssigkeit gefüllt wird. Dabei sind die jeweiligen Gas- und Flüssigkeitswege durch die Ventile voneinander entkoppelt. Das Gas dient zum Spülen, Fördern der Flüssigkeit und, in Verbindung mit der Druckregeleinrichtung, zur Einstellung der Druckverhältnisse innerhalb der Flüssigdosier-Vorrichtung.

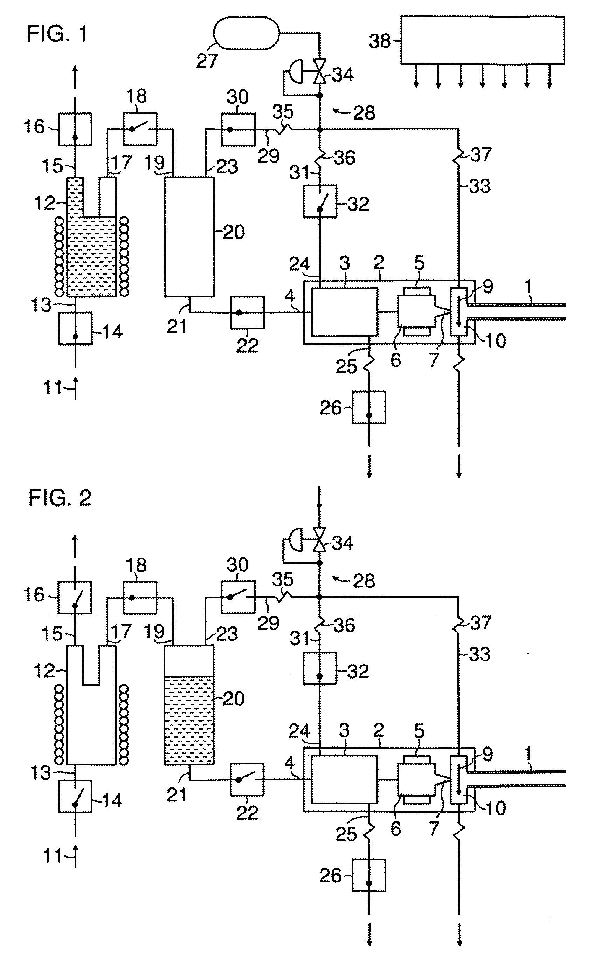

Zur weiteren Erläuterung der Erfindung wird im Folgenden auf die Zeichnung Bezug genommen, die in den
- Figuren 1 bis 4: in schematischer Darstellung ein Ausführungsbeispiel der erfindungsgemäßen Vorrichtung in vier aufeinanderfolgenden Betriebs-phasen zeigt.

Die in den Figuren 1 bis 4 gezeigte Flüssigdosier-Vorrichtung für einen Gasanalysator, von dem hier lediglich eine beheizbare Kapillare 1 zu sehen ist, weist einen Tropfengenerator 2 mit einen Vorratsraum 3 mit Flüssigkeitseinlass 4 und einem mit dem Vorratsraum 3 verbundenen und durch einen elektromechanischen Wandler 5 veränderbaren Verdrängungsraum 6 mit Austrittsöffnung 7 auf. Bei Anregung des Wandlers 5 wird aus dem Verdrängungsraum 6 ein Flüssigkeitstropfen 8 oder eine Folge davon durch eine, oder wie aus der DE 10127353 A1 bekannt, entgegen einer Gasströmung 9 aus einem kalten Bereich 10 in einen beheizbaren Bereich, hier die Kapillare 1, geschossen.

Die zu dosierende und anschließend zu analysierende Flüssigkeit 11 wird aus einem Prozess entnommen und durch eine beheizbare Verdampfungskammer 12 geleitet. Die Verdampfungskammer 12 weist dazu einen Flüssigkeitszulauf 13 mit einem ersten Ventil 14 und einen Flüssigkeitsablauf 15 mit einem zweiten Ventil 16 auf. Über einen Dampfauslass 17 und ein drittes Ventil 18 ist die Verdampfungskammer 12 mit einem Dampf- oder Kondensateinlass 19 einer Kondensatkammer 20 verbunden. Die Kondensation kann bereits in der Verbindung zwischen beiden Kammern 12 und 20 oder spätestens in der Kammer 20 erfolgen. Die Kondensatkammer 20 ist über einen Kondensatauslass 21 und ein viertes Ventil 22 mit dem Flüssigkeitseinlass 4 des Vorratsraums 3 des Tropfengenerators 2 verbunden. Die Kondensatkammer 20 und der Vorratsraums 3 des Tropfengenerators 2 weisen jeweils einen Gaseinlass 23 bzw. 24 und der Vorratsraum 3 einen Flüssigkeitsauslass 25 mit einem fünften Ventil 26 auf.

An einer Gasquelle 27, z. B. der Trägergasquelle eines Gaschromatographen, ist eine Druckregeleinrichtung 28 angeschlossen, die an einem ersten Ausgang 29 über ein sechstes Ventil 30 mit dem Gaseinlass 23 der Kondensatkammer 20 und an einem zweiten Ausgang 31 über ein siebtes Ventil 32 mit dem Gaseinlass 24 des Vorratsraums 3 des Tropfengenerators 2 verbunden ist. An einem dritten Ausgang 33 wird die Gasströmung 9 bereitstellt. Im gezeigten Ausführungsbeispiel besteht die Druckregeleinrichtung 28 aus einem Druckregler 34 mit drei Strömungswiderstände 35, 36, 37 für jeden der drei Ausgänge 29, 31, 33.

Die sieben Ventile 14, 16, 18, 22, 26, 30 und 32 werden durch eine Steuereinrichtung 38 derart gesteuert, dass die Flüssigdosier-Vorrichtung in aufeinanderfolgenden Dosierzyklen jeweils vier Betriebsphasen durchläuft.

Figur 1 zeigt die erste Phase, in der das erste, zweite, vierte, fünfte und sechste Ventil 14, 16, 22, 26, 30 geöffnet und die übrigen Ventile 18, 32 geschlossen (gesperrt) sind. Dabei wird die Verdampfungskammer 12 mit der zu dosierenden Flüssigkeit 11 gefüllt; die Kondensatkammer 20, der Vorratsraum 3 und der Verdrängungsraum 6 werden mit dem Gas gespült.

Figur 2 zeigt die zweite Phase, in der das dritte, fünfte und siebte Ventil 18, 26, 32 geöffnet und die übrigen Ventile 14, 16, 22, 30 geschlossen sind. Dabei wird die Flüssigkeit 11 in der Verdampfungskammer 12 verdampft und der entstehende Dampf oder sein Kondensat werden in die Kondensatkammer 20 geleitet. Zugleich werden der Vorratsraum 3 und der Verdrängungsraum 6 mit dem Gas gespült.

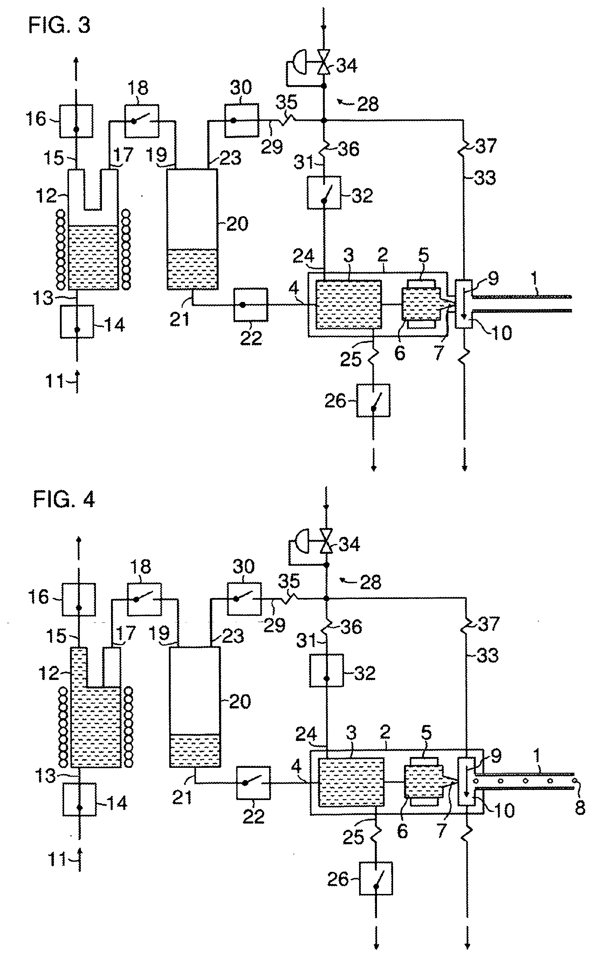

Figur 3 zeigt die dritte Phase, in der das erste, zweite, vierte, und sechste Ventil 14, 16, 22, 30 geöffnet und die übrigen Ventile 18, 26, 32 geschlossen sind. Dabei wird die Verdampfungskammer 12 wieder von der zu dosierenden Flüssigkeit 11 durchströmt, wobei aus der vorangegangenen Verdampfungsphase verbliebene Rückstände, wie nicht verdampfbare und gelöste Komponenten, aus der Kammer 12 heraus transportiert werden. Gleichzeitig werden der Vorratsraum 3 und der Verdrängungsraum 6 mit dem Kondensat aus der Kondensatkammer 20 gefüllt.

Figur 4 zeigt die vierte Phase, in der das erste, zweite und siebte Ventil 14, 16, 32 geöffnet und die übrigen Ventile 18, 22, 26, 30 geschlossen sind. Dabei wird die Verdampfungskammer 12 von der zu dosierenden Flüssigkeit 11 durchströmt. Gleichzeitig werden die Flüssigkeitstropfen 8 erzeugt, wobei der Druck in dem Vorratsraum 3 von der Druckregeleinrichtung 28 konstant gehalten wird.

## Patentansprüche

1. Flüssigdosier-Vorrichtung für einen Gasanalysator mit einem Tropfengenerator (2), der einen Vorratsraum (3) mit einem Flüssigkeitseinlass (4) und einen mit dem Vorratsraum (3) verbundenen und durch einen elektromechanischen Wandler (5) veränderbaren Verdrängungsraum (6) mit Austrittsöffnung (7) aufweist und bei Anregung des Wandlers (5) einen Flüssigkeitstropfen (8) durch eine oder entgegen einer von einer Gasquelle (27) erzeugten Gasströmung (9) aus einem kalten Bereich (10) in einen beheizbaren Bereich (1) schießt,
**dadurch gekennzeichnet,**
**dass** eine beheizbare Verdampfungskammer (12) vorhanden ist, die für eine zu dosierende Flüssigkeit (11) einen Flüssigkeitszulauf (13) mit einem ersten Ventil (14), einen Flüssigkeitsablauf (15) mit einem zweiten Ventil (16) und einen Dampfauslass (17) aufweist,
**dass** eine Kondensatkammer (20) vorhanden ist, die einen mit dem Dampfauslass (17) über ein drittes Ventil (18) verbundenen Dampf- oder Kondensateinlass (19), einen Kondensatauslass (21) und einen Gaseinlass (23) aufweist, wobei der Kondensatauslass (21) über ein viertes Ventil (22) mit dem Flüssigkeitseinlass (4) des Vorratsraums (3) des Tropfengenerators (2) verbunden ist,
**dass** der Vorratsraum (3) des Tropfengenerators (2) einen Flüssigkeitsauslass (25) mit einem fünften Ventil (26), und einen Gaseinlass (24) aufweist, und
**dass** die Gasquelle (27) an einer Druckregeleinrichtung (28) angeschlossen ist, die an einem ersten Ausgang (29) über ein sechstes Ventil (30) mit dem Gaseinlass (23) der Kondensatkammer (20) verbunden ist, an einem zweiten Ausgang (31) über ein siebtes Ventil (32) mit dem Gaseinlass (24) des Vorratsraums (3) des Tropfengenerators (2) verbunden ist und an einem dritten Ausgang (33) die Gasströmung (7) bereitstellt.

2. Flüssigdosier-Vorrichtung nach Anspruch 1, **dadurch gekennzeichnet, dass** die Druckregeleinrichtung (28) einen Druckregler (34) aufweist, der über drei Strömungswiderstände (35, 36, 37) mit den drei Ausgängen (2, 31, 33) der Druckregeleinrichtung (28) verbunden ist.

3. Flüssigdosier-Vorrichtung nach Anspruch 1 oder 2, **dadurch gekennzeichnet, dass** eine die Ventile (14, 16, 18, 22, 26, 30, 32) steuernde Steuereinrichtung (38) vorhanden ist, die dazu ausgebildet ist,
in einer ersten Phase das erste, zweite, vierte, fünfte und sechste Ventil (14, 16, 22, 26, 30) zu öffnen und die übrigen Ventile (18, 32) zu schließen, um die Verdampfungskammer (12) mit der zu dosierenden Flüssigkeit (11) zu füllen und die Kondensatkammer (20), den Vorratsraum (3) und den Verdrängungsraum (6) mit dem Gas zu spülen,
in einer zweiten Phase das dritte, fünfte und siebte Ventil (18, 26, 32) zu öffnen und die übrigen Ventile (14, 16, 22, 30) zu schließen, um den während der Verdampfung der Flüssigkeit (11) in der Verdampfungskammer (12) entstehenden Dampf oder sein Kondensat in die Kondensatkammer (20) zu leiten,
in einer dritten Phase das vierte und sechste Ventil (22, 30) zu öffnen und das dritte, fünfte und sechste Ventil (18, 26, 32) zu schließen, um den Vorratsraum (3) und den Verdrängungsraum (6) mit dem Kondensat aus der Kondensatkammer (20) zu füllen, und
in einer vierten Phase das siebte Ventil (32) zu öffnen und das dritte, vierte, fünfte und sechste Ventil (18, 22, 26, 30) zu schließen, um während der Erzeugung der Flüssigkeitstropfen (8) einen definierten Druck in dem Vorratsraum (3) einzustellen.

4. Flüssigdosier-Vorrichtung nach Anspruch 3, **dadurch gekennzeichnet, dass** die Steuereinrichtung (38) dazu augebildet ist, in der dritten und/oder vierten Phase das erste und zweite Ventil (14, 16) zu öffnen, um die Verdampfungskammer (12) mit der Flüssigkeit (11) zu durchströmen.

## Claims

1. Liquid metering device for a gas analyzer having a droplet generator (2), which has a reservoir (3) having a liquid inlet (4) and a displacement space (6), which is connected to the reservoir (3) and can be modified by an electromechanical transducer (5) and has an outlet opening (7), and, upon excitation of the transducer (5), shoots a liquid droplet (8) through or counter to a gas stream (9) generated by a gas source (27) from a cold area (10) into a heatable area (1),
**characterized in that** a heatable vaporization chamber (12) is provided, which, for a liquid (11) to be metered, has a liquid supply (13) having a first valve (14), a liquid drain (15) having a second valve (16), and a vapor outlet (17),
**in that** a condensate chamber (20) is provided, which has a vapor or condensate inlet (19) connected to the vapor outlet (17) via a third valve (18), a condensate outlet (21) and a gas inlet (23), wherein the condensate outlet (21) is connected via a fourth valve (22) to the liquid inlet (4) of the reservoir (3) of the droplet generator (2),
**in that** the reservoir (3) of the droplet generator (2) has a liquid outlet (25) having a fifth valve (26), and a gas inlet (24), and
**in that** the gas source (27) is connected to a pressure regulating unit (28), which is connected at a first outlet (29) via a sixth valve (30) to the gas inlet (23) of the condensate chamber (20), is connected to a second outlet (31) via a seventh valve (32) to the gas inlet (24) of the reservoir (3) of the droplet generator (2), and provides the gas stream (7) at a third outlet (33).

2. Liquid metering device according to Claim 1, **characterized in that** the pressure regulating unit (28) has a pressure regulator (34), which is connected via three flow resistances (35, 36, 37) to the three outlets (2, 31, 33) of the pressure regulating unit (28).

3. Liquid metering device according to Claim 1 or 2, **characterized in that** a control unit (38) which controls the valves (14, 16, 18, 22, 26, 30, 32) is provided, which is implemented for the purpose,
in a first phase, of opening the first, second, fourth, fifth, and sixth valves (14, 16, 22, 26, 30) and closing the remaining valves (18, 32) in order to fill the vaporization chamber (12) with the liquid (11) to be metered and to flush the condensate chamber (20), the reservoir (3), and the displacement space (6) with the gas,
in a second phase, of opening the third, fifth, and seventh valves (18, 26, 32) and closing the remaining valves (14, 16, 22, 30), in order to conduct the vapor arising during the vaporization of the liquid (11) into the vaporization chamber (12) or to conduct its condensate into the condensate chamber (20),
in a third phase, of opening the fourth and sixth valves (22, 30) and closing the third, fifth, and sixth valves (18, 26, 32), in order to fill the reservoir (3) and the displacement space (6) with the condensate from the condensate chamber (20), and
in a fourth phase, of opening the seventh valve (32) and closing the third, fourth, fifth, and sixth valves (18, 22, 26, 30), in order to set a defined pressure in the reservoir (3) during the generation of the liquid droplet (8).

4. Liquid metering device according to Claim 3, **characterized in that** the control unit (38) is implemented for the purpose of opening the first and second valves (14, 16) in the third and/or fourth phases in order to have the liquid (11) flow through the vaporization chamber (12).

## Revendications

1. Dispositif d'addition de fluide de manière dosée pour un analyseur de gaz, comprenant un générateur ( 2 ) de gouttes, qui a une espace ( 3 ) de réserve ayant une entrée ( 4 ) pour du liquide et un espace ( 6 ) de refoulement communiquant avec l'espace ( 3 ) de réserve, pouvant être modifié par un transducteur électromécanique et ayant une ouverture ( 7 ) de sortie et, lors de l'excitation du transducteur ( 5 ), une goutte ( 8 ) de liquide passe, par un courant ( 9 ) gazeux produit par une source ( 27 ) de gaz ou à l'encontre de ce courant, d'une zone ( 10 ) froide à une zone ( 1 ) pouvant être chauffée,
**caractérisé**
**en ce qu'**il y a une chambre ( 12 ) d'évaporation, qui peut être chauffée et qui a, pour un liquide ( 11 ) à ajouter de manière dosée, une entrée ( 13 ) pour du liquide ayant une première vanne ( 14 ), une sortie ( 15 ) pour du liquide ayant une deuxième vanne ( 16 ) et une sortie pour de la vapeur ;
**en ce qu'**il y a une chambre ( 20 ) de produit condensé, qui a une entrée ( 19 ) pour de la vapeur ou du produit condensé, communiquant avec la sortie ( 17 ) pour de la vapeur par une troisième vanne ( 18 ), une sortie ( 21 ) pour du produit condensé et une entrée ( 23 ) pour du gaz, la sortie ( 21 ) pour du produit condensé communiquant par une quatrième vanne ( 22 ) avec l'entrée ( 4 ) pour du liquide de l'espace ( 3 ) de réserve du générateur ( 2 ) de gouttes,
**en ce que** l'espace ( 3 ) de réserve du générateur ( 2 ) de gouttes a une sortie ( 25 ) pour du liquide ayant une cinquième vanne ( 26 ) et une entrée ( 24 ) pour du gaz et
**en ce que** la source ( 27 ) de gaz est raccordée à un dispositif ( 28 ) de régulation de la pression, qui est relié en une première sortie ( 29 ) par une sixième vanne ( 30 ) à l'entrée ( 23 ) pour du gaz de la chambre ( 20 ) de produit condensé, en une deuxième sortie ( 31 ) par une septième vanne ( 32 ) à l'entrée ( 24 ) pour du gaz de l'espace ( 3 ) de réserve du générateur ( 2 ) de gouttes et qui met le courant ( 7 ) de gaz à disposition en une troisième sortie ( 33 ).

2. Dispositif ( 2 ) d'addition de fluide de manière dosée suivant la revendication 1,
**caractérisé en ce que** le dispositif ( 28 ) de régulation de la pression a un régleur ( 34 ) de pression, qui communique par trois résistances ( 35, 36, 37 ) à l'écoulement avec les trois sorties ( 2, 31, 33 ) du dispositif ( 28 ) de régulation de la pression.

3. Dispositif ( 2 ) d'addition de fluide de manière dosée suivant l'une des revendications 1 ou 2,
**caractérisé en ce qu'**il y a un dispositif ( 38 ) de commande, qui commande les vannes ( 14, 16, 18, 22, 26, 30, 32 ) et qui est tel que,
dans une première phase, il ouvre les première, deuxième, quatrième, cinquième et sixième vannes ( 14, 16, 22, 26, 30 ) et ferme les autres vannes ( 18, 32 ) pour remplir la chambre ( 12 ) d'évaporation du liquide ( 11 ) à ajouter de manière dosée et pour balayer, par le gaz la chambre ( 20 ) de produit condensé, l'espace ( 3 ) de réserve et l'espace ( 6 ) de refoulement,
dans une deuxième phase, il ouvre les troisième, cinquième et septième vannes ( 18, 26, 32 ) et ferme les autres vannes
( 14, 16, 22, 30 ) pour conduire, pendant l'évaporation du liquide ( 11 ), de la vapeur se créant dans la chambre ( 12 ) d'évaporation ou son produit condensé dans la chambre ( 20 ) de produit condensé,
dans une troisième phase, il ouvre les quatrième et sixième vannes ( 22, 30 ) et ferme les troisième, cinquième et septième vannes ( 18, 26, 32 ) pour remplir l'espace ( 3 ) de réserve et l'espace ( 6 ) de refoulement du produit condensé provenant de la chambre ( 20 ) de produit condensé, et
dans une quatrième phase, il ouvre la septième vanne ( 32 ) et ferme les troisième, quatrième, cinquième et sixième vannes ( 18, 22, 26, 30 ) pour établir, pendant la production de la goutte ( 8 ) de liquide, une pression définie dans l'espace ( 3 ) de réserve.

4. Dispositif ( 2 ) d'addition de fluide de manière dosée suivant la revendication 3,
**caractérisé en ce que** le dispositif ( 38 ) de commande est tel qu'il ouvre, dans la troisième et/ou dans la quatrième phases, la première et la deuxième vannes ( 14, 16 ) pour faire passer le liquide ( 11 ) dans la chambre ( 12 ) d'évaporation.
